(19) **Europäisches Patentamt / European Patent Office / Office européen des brevets**

(11) **EP 1 835 435 B1**

(12) **EUROPEAN PATENT SPECIFICATION**

(45) Date of publication and mention
of the grant of the patent:
**12.08.2009  Bulletin 2009/33**

(51) Int Cl.:
**G06K 7/00** (2006.01)   **G01S 13/75** (2006.01)

(21) Application number: **06253114.0**

(22) Date of filing: **15.06.2006**

(54) **Rfid reader/writer**

RFID-Leser/-Schreiber

Lecteur/encodeur à radio fréquence RFID

(84) Designated Contracting States:
**DE FR GB**

(30) Priority:  **16.03.2006   JP 2006073539**

(43) Date of publication of application:
**19.09.2007   Bulletin 2007/38**

(60) Divisional application:
**07119116.7 / 1 887 491**

(73) Proprietor: **FUJITSU LIMITED**
**Kawasaki-shi,**
**Kanagawa 211-8588 (JP)**

(72) Inventor: **Maniwa, Toru**
**Kawasaki-shi**
**Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(56) References cited:
**DE-A1- 4 239 065          US-A- 3 852 755**
**US-A- 5 247 305**

## Description

The present invention relates to a reader/writer for use in a Radio Frequency Identification (RFID) system.

The conventional method of enhancing the communication performance between a RFID reader/writer and a RFID tag, when reading a plurality of RFID tags, is by optimally switching polarity after reading each tag. In this method, the polarization is switched for each tag, which in turn causes large delays in switching antennas, further causing a failure to read information at a high speed.

Furthermore, a technology enabling collective reading (anti-collision) of RFID also exists, which enables the simultaneous reading of a plurality of tags. To steadily read data independent of the direction of a tag, in many cases a circularly polarized antenna is used as the antenna for the RFID tag reader/writer.

Alternatively, an antenna of a common tag is linear and receives only a linear polarization component. Since the direction of a tag is uncertain during use, the direction of an antenna is also uncertain. When there are a number of tags, it is possible that power cannot be evenly supplied to all tags, creating a situation where there can be a tag not added to the anti-collision protocol, and therefore the information from all tags cannot be read.

Relating to the technology of wirelessly collecting data in equipment, there are techniques of using an antenna for oval polarization, circular polarization, or linear polarization by changing the phase between power supply points of patch antennas (for example, refer to patent document 1).

[Patent Document 1] Japanese Patent Application Laid-open No. H10-260251

As noted above, it is not possible to realize high speed reading of the RFID tag when switching polarization for each of the tags. If a simultaneous read is attempted from a plurality of tags by anti-collision when the tags are arranged at random, then the direction of the antenna is also set at random, and there is the possibility that power cannot be evenly supplied to all tags although circular polarization is transmitted from the RFID reader/writer.

US 3 852 755 discloses a transponder having a novel circuit for the extraction of power from an incident interrogating beam of electromagnetic energy, the extracted power being utilized to operate a digital coding circuit. The transponder further comprises an oscillator circuit for developing a train of pulses of electromagnetic energy with successive pulses occurring in a coded format in accordance with a digital code imparted by the digital coding circuit. The transponder is of sufficiently small size to be affixed in the form of a tag to automobiles, personnel, containers and other objects to be identified. An interrogation system for utilizing the electronic tag is also disclosed.

US 5 247 305 discloses a movable-object identification system which includes an interrogator for transmitting an interrogation signal, and a responder mounted on a movable object for transmitting a reply signal in response to the interrogation signal. The reply signal contains identification information. The responder includes an antenna for receiving the interrogation signal from the interrogator and for radiating the reply signal; and an input device connected to the antenna for receiving an electric power of the interrogation signal received by the antenna. The input device includes a receiving element for dividing the received electric power into a first separation electric power and a second separation electric power corresponding to a travelling and reflected wave of the interrogation signal, respectively. The receiving element has an impedance. The responder further includes a generating device for generating predetermined identification information using the first separation electric power; and a modulating device, connected in parallel with the input device and connected to the antenna, for varying the impedance of the receiving element in accordance with the generated identification information, for modulating the second separation electric power of the interrogation signal in accordance with the identification information to generate the reply signal, and for feeding the reply signal to the antenna.

DE 42 39 065 discloses a radio-frequency communications device in which an interrogation signal which is received and which is to be emitted again is modified in a coded transponder. The device is intended to be designed for increased reliability in its operation irrespective of the relative physical relationship between the interrogator and the transponders. To this end, the interrogating antennas are preferably circular-polarised while, in contrast, the transponder antenna, which can be produced more cost-effectively, is linear-polarised. Range-dependent masking of the transponder signal in the interrogator is avoided if a quadrature mixer, for a received signal which is phase-shifted through 90°, is provided in its receiver, in addition to the transmission/reception mixer. Mixed phase and amplitude modulation, as can be achieved by using a varactor in the antenna circuit upstream of the transponder antenna, is less susceptible to interference than pure amplitude modulation with attenuation or blanking of this antenna circuit.

Embodiments of the present invention seek to provide means capable of supplying power to a plurality of tags at high speed and efficiently.

The invention is defined by the independent claims. Optional features are set out in the dependent claims.

Before transmitting a command, the carrier wave of circular polarization is transmitted. The first polarization component of the carrier wave is transmitted from the first antenna, and the second polarization component is transmitted from the second antenna. In the reflected waved emitted from the plurality of tags using a linearly polarized antenna, the first antenna receives the first polarization component, and the second antenna receives the second polarization component. By analyzing the signal received by each antenna, and in order to control the polarization of the carrier wave to be transmitted by a command based on the analysis result, the transmission power for each antenna is set. Thus, the power can be set corresponding to the polarization distribution of the plurality of tags.

The first and second polarization components are, for example, a vertical component and a horizontal component, or a right-handed polarization component and a left-handed polarization component. Depending on the configuration of the receiver, the phase shift of $\pi/2$ can be set between the first and second polarization components. In addition, the power for each polarization component may also be configured by the use, with the power setting to be transmitted as a command.

Advantageously, according to embodiments of the present invention, electric power is more efficiently provided for a plurality of RFID tags. Therefore, the number of switches of the polarization to read information from the plurality of tags can be reduced, and the reading process can be performed at a higher speed.

For a better understanding of the present invention, and to show how the same may be carried into effect, reference will now be made, by way of example, to the accompanying drawings, in which:-

Fig. 1 shows the configuration of the RFID reader/writer according to a style of embodiment of the present embodiment,

Fig. 2A is an explanatory view (1) of the basic operation of the reader/writer,

Fig. 2B is an explanatory view (2) of the basic operation of the reader/writer,

Fig. 2C is an explanatory view (3) of the basic operation of the reader/writer,

Fig. 3 shows the configuration of the reader/writer having a separate transmission/reception system for the vertical component and the horizontal component,

Fig. 4A is an explanatory view (1) of a series of operations from determining the vertical component and the horizontal component to transmitting a command,

Fig. 4B is an explanatory view (2) of a series of operations from determining the vertical component and the horizontal component to transmitting a command,

Fig. 4C is an explanatory view (3) of a series of operations from determining the vertical component and the horizontal component to transmitting a command,

Fig. 5 shows the configuration of the reader/writer having a separate transmission/reception system for the right-hand polarization component and the left-hand polarization component,

Fig. 6A is an explanatory view (1) of a series of operations from determining the right-hand polarization component and the left-hand polarization component to transmitting a command,

Fig. 6B is an explanatory view (2) of a series of operations from determining the right-hand polarization component and the left-hand polarization component to transmitting a command,

Fig. 6C is an explanatory view (3) of a series of operations from determining the right-hand polarization component and the left-hand polarization component to transmitting a command,

Fig. 7 is a flowchart of the process of determining the power ratio between the polarization components of the commands depending on the distribution of tags,

Fig. 8 shows the configuration of the reader/writer provided with a separate transmission/reception system for the vertical component and the horizontal component,

Fig. 9A is an explanatory view (1) of a series of operations from determining the vertical component and the horizontal component to transmitting a command,

Fig. 9B is an explanatory view (2) of a series of operations from determining the vertical component and the horizontal component to transmitting a command,

Fig. 9C is an explanatory view (3) of a series of operations from determining the vertical component and the horizontal component to transmitting a command,

Fig. 10 shows another configuration of the reader/writer provided with a separate transmission/reception system for the vertical component and the horizontal component,

Fig. 11A is an explanatory view (1) of the process of determining the right-hand polarization component and the left-hand polarization component and transmitting a command,

Fig. 11B is an explanatory view (2) of the process of determining the right-hand polarization component and the left-hand polarization component and transmitting a command,

Fig. 11C is an explanatory view (3) of the process of determining the right-hand polarization component and the left-hand polarization component and transmitting a command, and

Fig. 12 is a flowchart of the process of determining the power ratio and the phase difference between the polarization components of the commands depending on the distribution of tags.

It is preferable that the polarized wave transmitted from a reader/writer to a RFID tag is an oval polarization depending on the distribution of a plurality of tags. Through the usage of oval polarization for transmission to the tags from the reader/writer, power can be supplied efficiently to a plurality of tags even when anti-collision is performed. Therefore, in the manner of embodiment of the present invention, the reader/writer transmits a transmission wave of appropriate oval polarization.

Preferable manner of embodiments according to the present invention are described below in detail by referring to the attached drawings.

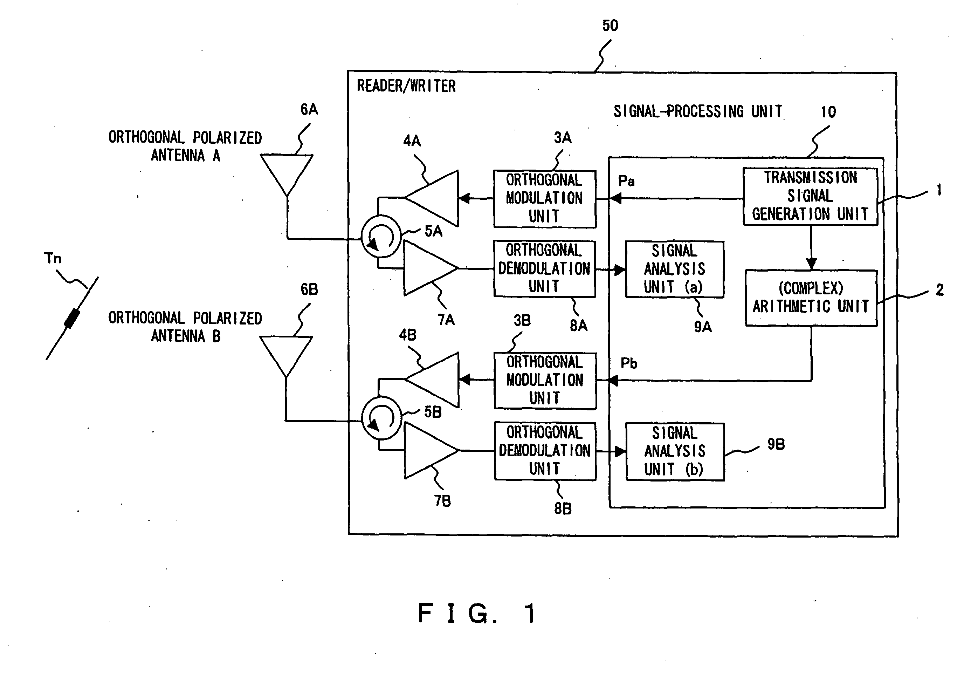

Figure 1 (Fig. 1) shows the configuration of the RFID reader/writer according to a manner of embodiment of the present invention. An RFID reader/writer (hereinafter referred to as a reader/writer for short) 50 is provided with two transmission/reception systems, and comprises a signal - processing unit 10, an orthogonal modulation unit 3 (3A, 3B), a transmitter 4 (4A, 4B), a separator 5 (5A, 5B), an antenna 6 (6A, 6B), a receiver 7 (7A, 7B), and an orthogonal demodulation unit 8 (8A, 8B). The reader/writer 50 communicates with a plurality of tags T1, T2, ..., TN without contact, reads the information about the tags, and writes information to the tags. In Fig. 1, only the n-th tag is described without describing a plurality of tags. In the following explanation, when it is not necessary to designate which system in the two transmission/reception systems is, the characters A and B are omitted.

The signal-processing unit 10 includes a DSP (digital signal processor), among other components, for processing a digital signal obtained from the transmission wave transmitted from the reader/writer 50 to the tag and the reflected wave from the tag. The digital signal generated in the signal-processing unit 10 is carried on the carrier wave in the orthogonal modulation unit 3, and externally transmitted through the transmitter 4 and the antenna 6. When the RFID tag receives an electromagnetic wave from the reader/writer, it reflects a wave back to the reader/writer. When antenna 6 receives the reflected wave, it is transmitted to the orthogonal demodulation unit 8 through the receiver 7, and a digital signal is retrieved. The retrieved signal is then supplied to the signal-processing unit 10, and various processes are performed. The separator 5 separates the transmission wave and the received wave of each polarization component.

The two transmission/reception systems transmit and receive the polarization components orthogonally to each other. For example, one transmission/reception system is provided for transmitting/receiving a vertical component, and the other for transmitting/receiving a horizontal component. Alternatively, one transmission/reception system is provided for transmitting/receiving a right-handed polarization component, and the other transmission/reception system for transmitting/receiving a left-handed polarization component. In the following explanation, the two systems respectively are referred to as system A and system B.

The configuration of the signal-processing unit 10 includes a transmission signal generation unit 1, a (complex) arithmetic unit 2, and a received signal analysis unit 9 (9A, 9B). The transmission signal generation unit 1 generates a signal for transmission of an electromagnetic wave to a tag as described above. The (complex) arithmetic unit 2 calculates, based on the power Pa for the polarized waves transmitted from system A, the power Pb for the polarization component (orthogonal to the system A) transmitted from system B, and the phase difference between the polarization components. The received signal analysis unit 9 analyzes the signal provided from the orthogonal demodulation unit 8 of each system. The (complex) arithmetic unit 2 only calculates the scalar amount without performing a complex arithmetic operation depending on the configuration of the transmission/reception system of reader/writer 50.

The following example describes the case in which the reflected wave transmitted from the RFID tag T to the carrier wave transmitted from the reader/writer 50 though linear polarization.

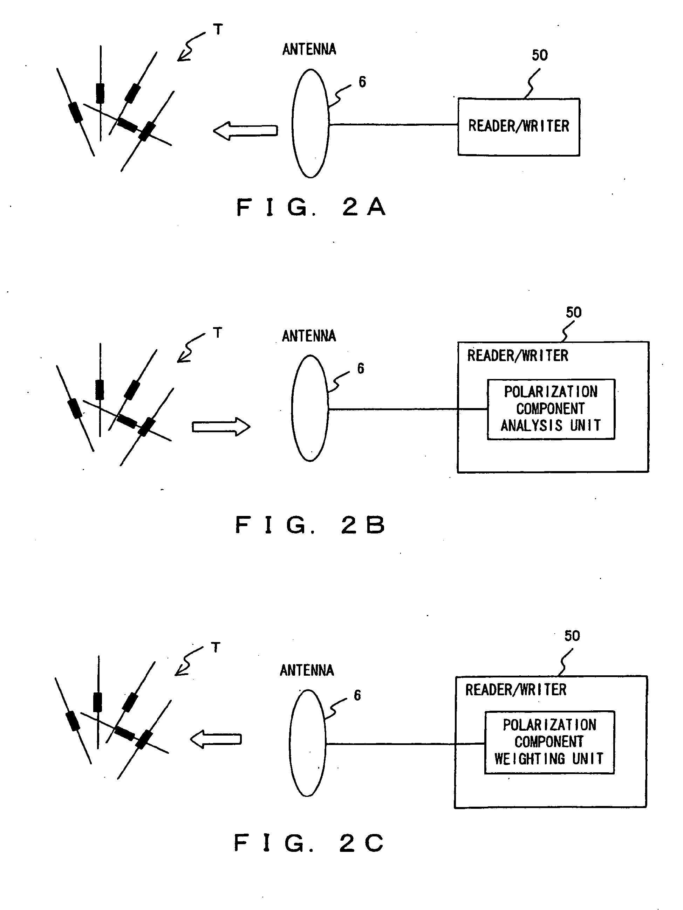

Figs. 2A, 2B, and 2C are explanatory views of the basic operations of the reader/writer 50 as shown in Fig. 1. As shown in Fig. 2A, the reader/writer 50 first transmits continuous carrier waves (CW, constant wave) to a plurality of tags T. In this example, circular polarization as a non-modulated wave is transmitted. Following that, as shown in Fig. 2, the reader/writer 50 receives reflected waves from a plurality of tags (T1, T2, ..., TN) in response to the carrier waves. The antennas 6A and 6B, respectively, receive the reflected waves of a polarization component corresponding to the polarization component of the transmitted carrier waves. A received baseband signal (hereinafter referred to simply as a signal for short) is analyzed by the received signal analysis unit 9 of the signal processing unit 10, which determines the value of the signal amplitude: a, b, and so on. Finally, as shown in Fig. 2C, based on the analysis result as shown in Fig. 2B, the power transmitted from systems A and B of the reader/writer 50, that is, the power for each polarization component, is determined, and transmits a command to a tag. Hereinafter, setting the power, for example, of a command transmitted from the transmission/reception systems A and B to a tag is expressed as "weighting".

As described above in the explanation shown by referring to Fig. 1, the polarization components received by the two transmission/reception systems are orthogonal to each other, and the vertical component and the horizontal component or the right-handed polarization component and the left-handed polarization component are shown as examples. Described below are the configuration and the operation of the reader/writer depending on the type of polarized antenna.

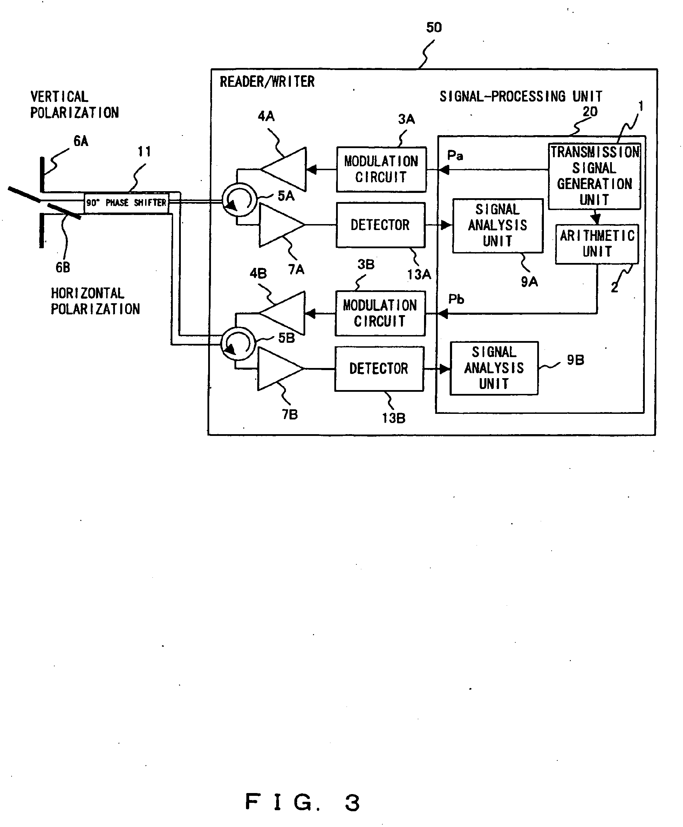

Fig. 3 shows the configuration of the reader/writer 50 provided with the transmission/reception systems for the vertical component and the horizontal component. In the configuration shown in Fig. 3, a configuration diagram similar to that shown in Fig. 1 is omitted here.

Two antennas 6 can be dipole antennas. Fig. 3 shows the antenna 6A for transmitting/receiving the polarized waves of the vertical polarization component and the antenna 6B for transmitting/receiving the polarized waves of the horizontal polarization component.

A ninety-degree (90°) phase shifter 11 is provided immediately below the two antennas 6A and 6B. By passing the polarized waves transmitted from the antennas 6A and 6B through the 90° phase shifter 11, the phase difference between the vertical component and the horizontal component of the polarized waves transmitted from the reader/writer 50 is assumed to be 90°. Thus, the electromagnetic wave transmitted from the antenna 6 to the tag becomes a circular polarization equally containing the vertical component and the horizontal component. Related to the transmission/reception systems, the orthogonal demodulation unit 8 is provided in Fig. 1, but a detector 13 is provided in the configuration shown in Fig. 3.

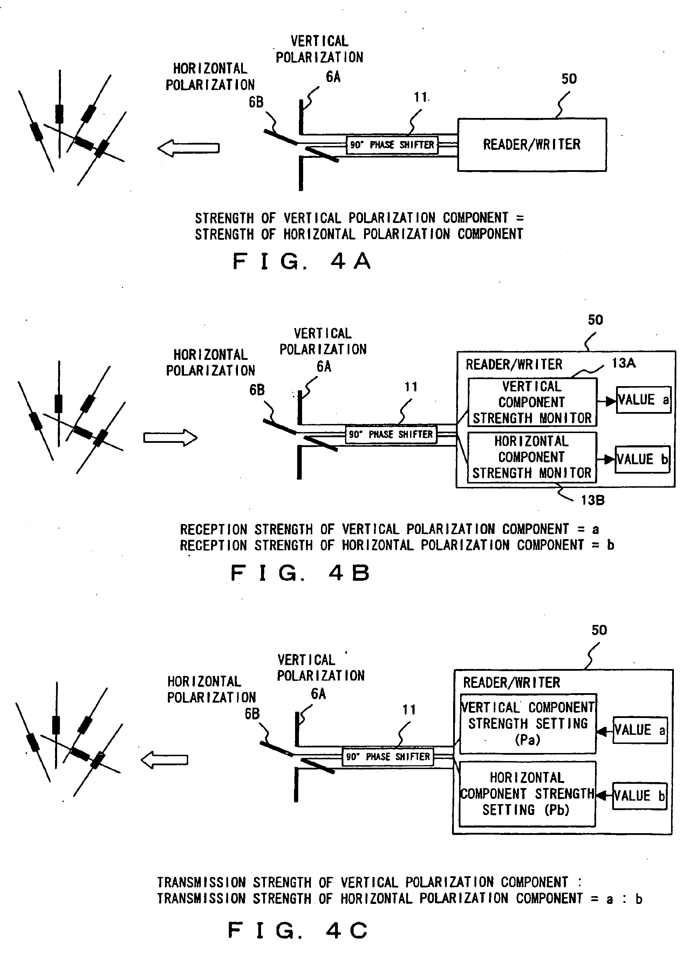

Figs. 4A, 4B, and 4C are explanatory views of a series of operations from weighting the vertical component and the horizontal component to transmitting a command. In Figs. 4A, 4B, and 4C, of the two orthogonal polarized antennas, the antenna for the vertical polarization component corresponds to the antenna 6A shown in Fig. 1, and the antenna for the horizontal polarization component corresponds to the antenna 6B shown in Fig. 1.

First, as shown in Fig. 4A, the reader/writer 50 transmits a carrier wave (CW). As described above, the two dipole antennas 6A and 6B, respectively, transmit the polarized waves of the vertical component and the horizontal component. Since the strength of each component is equal, and the phase difference is set to 90°, the carrier wave is transmitted with circular polarization.

As shown in Fig. 4B, the signal of the vertical component and the horizontal component detected by the vertical component monitor (detector) 13A and the horizontal component monitor (detector) 13B of the reader/writer 50 are analyzed by their respective received signal analysis unit 9, and the respectively received components a and b are obtained. In this example, a and b indicate the scalar amount. Since the tag is provided with a linearly polarized antenna, it returns to the reader/writer 50 a reflected wave for the polarization component corresponding to the direction of each tag (antenna) in the polarized waves of the vertical component and the horizontal component transmitted from the reader/writer 50. That is, the reader/writer 50 receives a reflected wave composed of a ratio of the strength of the vertical component and the strength of the horizontal component based on the distribution of the directions of the antennas of a plurality of tags. In the antennas of a plurality of tags, for example, if a number of antennas are arranged in the horizontal polarization component direction, the horizontal polarization component of the reflected wave is larger than the vertical polarization component relatively. If the antennas of all tags are arranged in the horizontal component direction, only the horizontal component is detected in the reflected wave.

Based on the obtained received components a and b, the power (Pa and Pb) for the command to be transmitted from the reader/writer 50 to the tag is calculated. Assuming that the power to be transmitted from the reader/writer 50 is P, the power transmitted from the antennas 6A and 6B is obtained by the following equations:

$$Pa = \{a \ / \ (a^2 + b^2)\} \ \times \ P \ \dots \ (1)$$

$$Pb = \{b \ / \ (a^2 + b^2)\} \ \times \ P \ \dots \ (2)$$

As shown in the preceding equations, the ratio of the transmission strength of the vertical polarization component to the transmission strength of the horizontal polarization component is set to a to b. That is a command of oval polarization satisfying the equations (1) and (2) is transmitted.

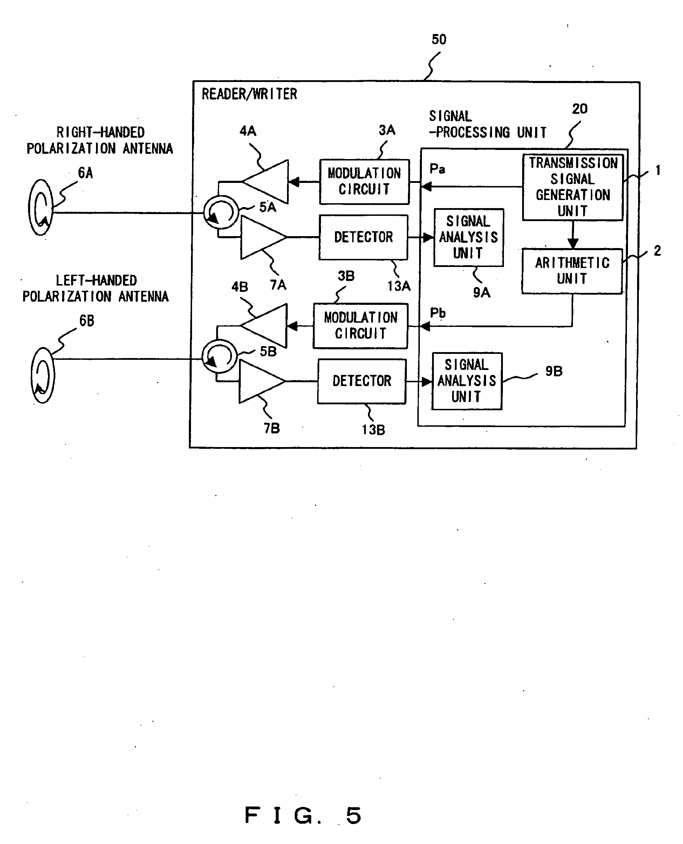

Fig. 5 shows the configuration of the reader/writer 50 provided with a transmission/reception system for the right-handed polarization component and the left-handed polarization component. In this example, in the configuration shown in Fig. 5, the configuration differs from that of the reader/writer shown in Fig. 3 due to the antennas 6A and 6B. Each antenna of the right-handed polarization antenna 6A and the left-handed polarization antenna 6B transmits the polarized waves of the right-handed polarization component and the left-handed polarization component correspondingly.

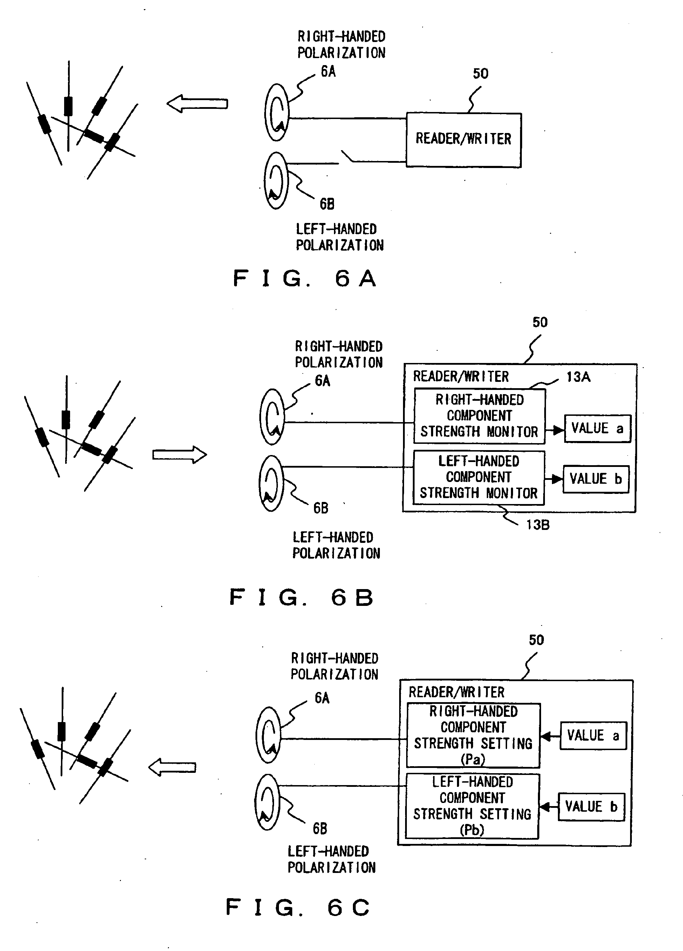

Figs. 6A, 6B, and 6C are explanatory views of a series of operations from weighting the right-handed polarization component and the left-handed polarization component to transmitting a command. Described below are the differences from the situation in which the vertical component and the horizontal component are weighted using two dipole antennas as shown in Figs. 4A, 4B, and 4C.

First, as shown in Fig. 6A, the carrier wave transmitted from the reader/writer 50 is a circular polarization as described above. In the two polarized antennas, the circular polarization is transmitted from one antenna, that is, from the right-handed polarization antenna in the example shown in Fig. 6A.

Then, as shown in Fig. 6B, the reflected wave from the carrier wave from each tag is received by the reader/writer 50 and each component is detected, and the signal analysis units 9A and 9B analyze the value of each component. The values of the obtained right-handed polarization component and left-handed polarization component are respectively set as a and b (a and b indicate scalar amounts). The method of obtaining the values of a and b depending on the arrangement of the antennas of a plurality of tags is described above. Finally, as shown in Fig. 6C, based on the obtained values a and b, the power Pa and Pb of the command transmitted respectively from the antennas 6A and 6B is obtained. The equations for obtaining the Pa and Pb are identical to those listed above, the explanation is omitted here.

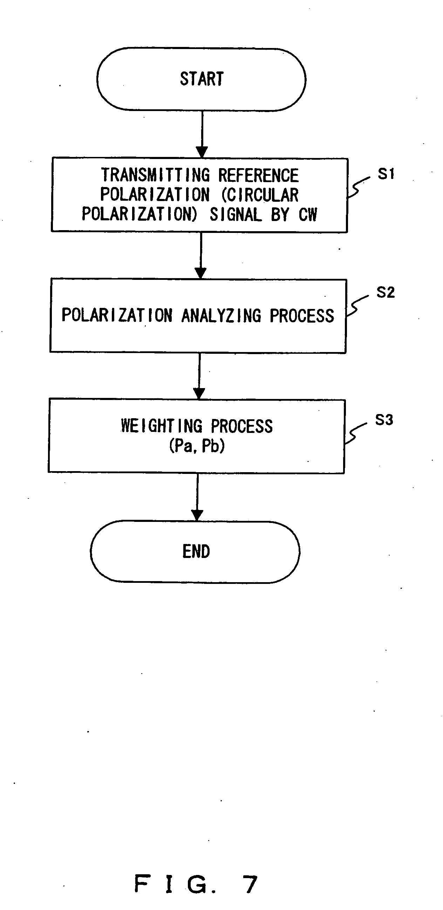

Fig. 7 is a flowchart of the process for determining the power for each polarization component of the command depending on the distribution of tags. The series of processes shown in Fig. 7 are performed with the timing of, for example, starting the anti-collision (collective read) process by the reader/writer 50 or the timing of starting the process of transmitting a command to a tag during the execution of the anti-collision process.

First, in step S1, the polarized wave, (carrier wave, CW) used as a reference for checking the polarization direction of a tag, is transmitted. The transmitted carrier wave has circular polarization as described above. Then, in step S2, the carrier waves emitted again (reflected) by the tags are received by the reader/writer 50, and the values of the polarization components orthogonal to each other are obtained. The polarization components a and b obtained by the reader/writer 50, provided with the configuration shown in Figs. 3 and 5, are a scalar amount. Finally, in step S3, the above-mentioned Pa and Pb are set as the transmission power of each polarization component when the transmission power is set as P, and a command provided with the set power is transmitted, thereby terminating the process.

As explained above by referring to Figures 3 through 7, according to the reader/writer 50 of this manner of embodiment of the present invention, the circular polarization is transmitted as a non-modulated wave before transmitting a command to a plurality of tags, and the detector 13 detects a received signal for each of the two polarization components orthogonal to each other relating to the reflected waves from the tags. Based on the value of the received signal for each of the obtained polarization components, the power to be transmitted for each polarization component is determined. The polarization component of the reflected wave from a plurality of tags, for determination of power for each polarization component, is determined depending on the positional relationship between the reader/writer 50 and the plurality of tags T. Therefore, although a plurality of tags as the destinations of a command are arranged at random, a command can be transmitted with the oval polarization depending on the arrangement of tags. Thus, the frequency of switching the polarization can be reduced in the process such as the anti-collision, for example, and the time required to process the anti-collision, among other things, can be shortened.

The reader/writer according to the manner of embodiment described above determines the size of the transmission power of a command for each polarization component. Described below is a reader/writer capable of setting the phase difference between the polarization components in addition to the power of a command.

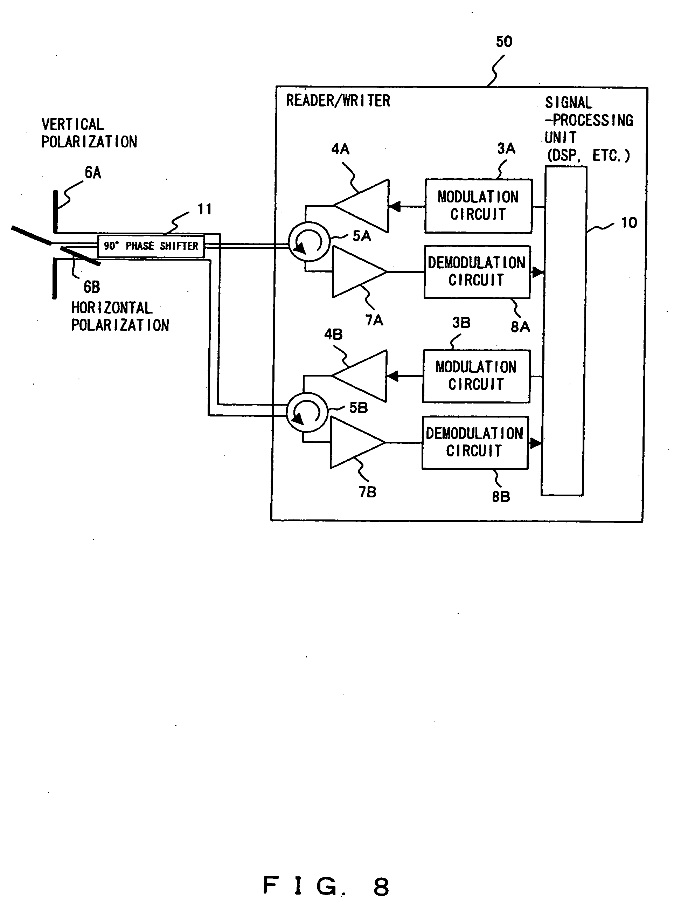

Fig. 8 shows the configuration of the reader/writer 50 provided with a separate transmission/reception system for the vertical component and the horizontal component. When the reader/writer shown in Fig. 8 is compared with the reader/writer shown in Fig. 3, the means for detecting the received signal contained in the reflected wave corresponds to the detector 13 in Fig. 3 while the orthogonal demodulation unit 8 corresponds to it in Fig. 8. In Fig. 8, the configuration of the signal processing unit 10 is omitted, but it is similar to that shown in Fig. 1.

The demodulation unit 8 is formed by an orthogonal demodulation circuit, among other components, and can detect the amplitude and the phase of each polarization component of the signal received by an antenna. The amplitude and the phase of an obtained signal are provided to the signal-processing unit 10. The signal-processing unit 10 calculates the power and the phase difference between the two polarized waves for each polarization component of a command based on the amplitude and phase difference of each polarization component.

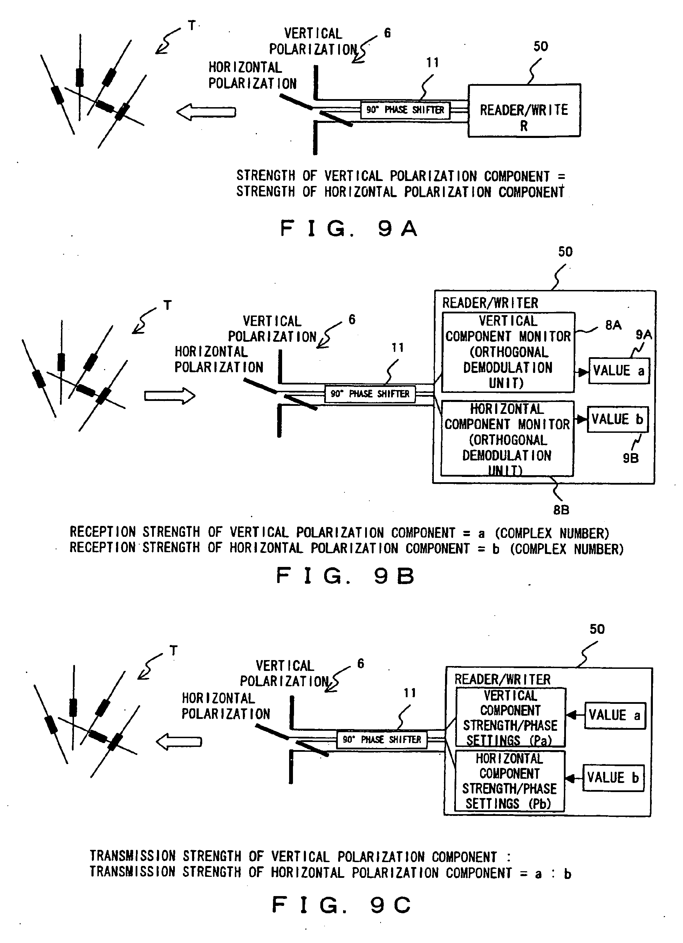

Figs. 9A, 9B, and 9C are explanatory views of a series of operations from weighting the vertical component and the horizontal component to transmitting a command in the reader/writer shown in Fig. 8. Described are the differences in the operations for this manner of embodiment with the operations of the reader/writer provided with the configuration shown in Fig. 3.

The transmission of the carrier wave shown in Fig. 9A, as in Fig. 4A, transmits the circular polarization which includes equally the vertical component and the horizontal component. As shown in Fig. 9B, when the reflected waves are received by the reader/writer 50 from a plurality of tags, the signals of the vertical component and the horizontal component are respectively provided for the vertical component monitor (corresponding to the demodulation unit 8A shown in Fig. 8) and the horizontal component monitor (corresponding to the demodulation unit 8B shown in Fig. 8) and analyzed. The value indicating each polarization component acquired as a result of the analysis is defined as a and b. In this example, a and b indicates the amount of the vectors, a complex number.

Based on the received components a and b, the power (Pa and Pb) of the command transmitted from the reader/writer 50 to the tags and the phase difference between the polarized waves transmitted from the two antennas 6A and 6B are set. The power transmitted from each of the antennas 6A and 6B with the transmission power set as P can be expressed by the following equations (3) and (4); the phase difference between the polarized waves transmitted from the two antennas 6A and 6B is given by ($\angle a - \angle b$):

$$Pa = \{|a| / (|a|^2 + |b|^2)\} \times P \;\dots\; (3)$$

$$Pb = \{|b| / (|a|^2 + |b|^2)\} \times P \;\dots\; (4)$$

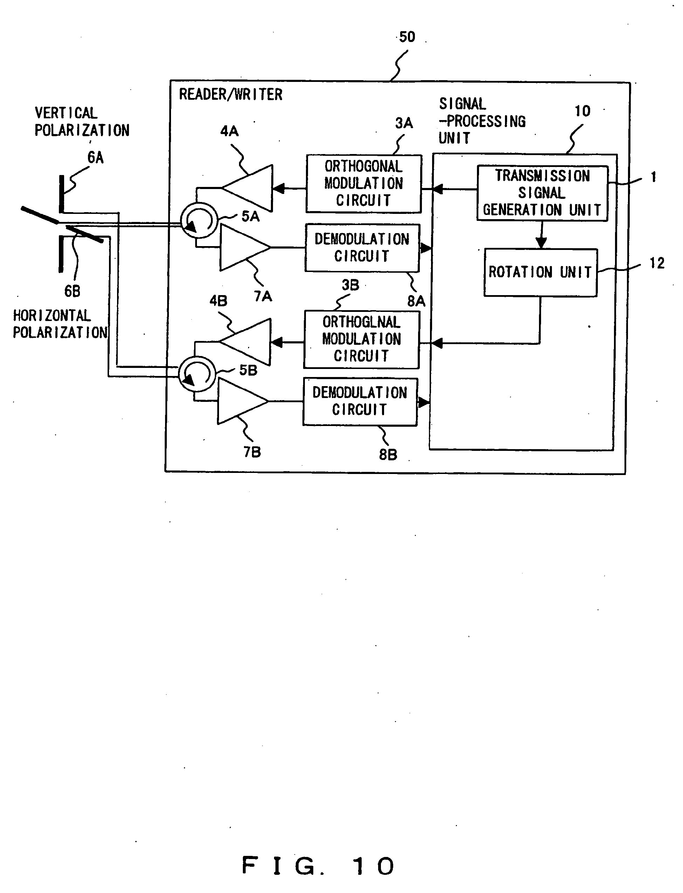

Fig. 10 shows another configuration of the reader/writer 50 provided with a separate transmission/reception system for the vertical component and the horizontal component. As compared with the configuration shown in Fig. 8, the 90° phase shifter 11 is not provided immediately below the two antennas, and a rotation unit 12 is provided inside the signal processing unit 10.

The rotation unit 12 turns the phase of the signal transmitted to the transmission/reception system A 90°, and provides it for the transmission/reception system B. Thus, the polarized wave transmitted from the antenna 6A is orthogonal to the polarized wave transmitted from the antenna 6B. The reader/writer 50 having the configuration shown in Fig. 10, using two dipole antennas, transmits from the antennas 6A and 6B the polarized waves of the vertical component and the horizontal component. With the reader/writer 50 having the above-mentioned configuration, the power Pa and Pb of the command to be transmitted to the tag and the phase difference ($\angle a - \angle b$) can be set.

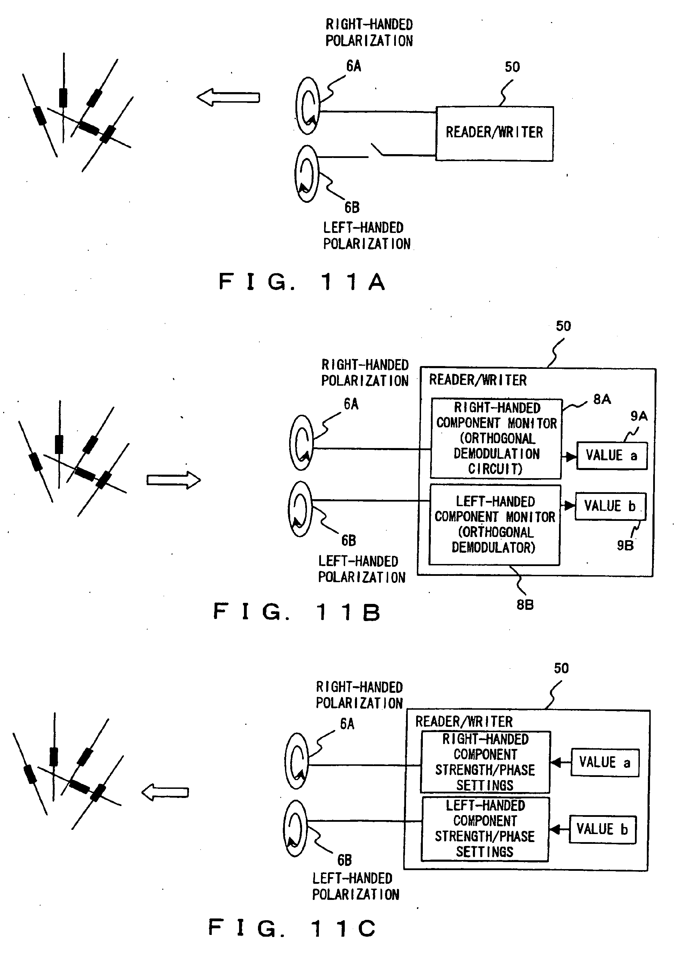

Figs. 11A, 11B, and 11C are explanatory views of the process of transmitting a command after weighting it for the right-handed polarization component and the left-handed polarization component. Related to the configuration of the reader/writer 50, a signal is detected by the detector 13 in Fig. 5 while an orthogonal demodulation circuit, for example, detects a signal and a phase. Otherwise, the configurations are the same as those shown in Fig. 5. In this example, the differences from the operations of the reader/writer shown in Figs. 6A, 6B, and 6C are described.

In the process shown in Fig. 11A, for the circularly polarized waves transmitted from one (in Figs. 11A, 11B, and 11C, the antenna 6A for right-handed polarization) of the two antennas, the reflected waves are received by the reader/writer 50 as shown in Fig. 11B. The antenna 6A receives the right-handed polarization component, and the antenna 6B receives the left-handed polarization component. The signal of each polarization component included in the reflected waves received by the antenna is provided for the right-handed component monitor (orthogonal demodulation circuit) 8A and the left-handed component monitor (orthogonal demodulation circuit) 8B, and the amplitude and the phase of the signal are analyzed. The values obtained as a result of the analysis are set as a and b (a and b are vector amounts). The method for obtaining the power and the phase difference for each polarization component in Fig. 11C is similar to that shown in Fig. 9C. Therefore, the explanation is omitted here.

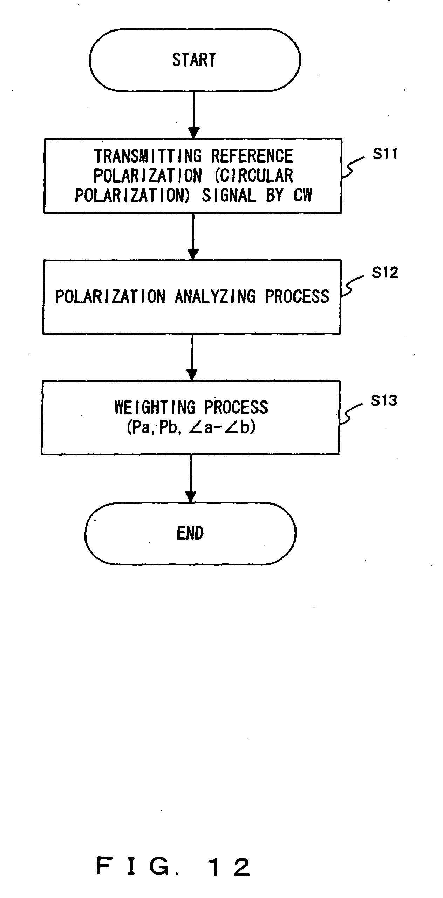

Fig. 12 is a flowchart of the process of determining the power ratio and the phase difference between the polarization components of the commands depending on the distribution of tags. A series of processes shown in Fig. 12 are performed with the timing of starting the anti-collision process or with the timing of starting the transmission of a command for the tags during the execution of the anti-collision process.

Since the process in step S11 is similar to the process in step S1 shown in Fig. 7, the explanation is omitted here. In step S12, for the signal emitted from the tag, the components a and b are obtained from each polarization component. As described above, a and b indicate a vector amount (which is a complex number). In step S13, using the amounts a and b, the power for each polarization component about the command to be transmitted and the phase difference ($\angle a - \angle b$) between the polarization component are determined, and the command having the power and phase difference is transmitted, subsequently terminating the process.

The reader/writer 50 explained by referring to Fig. 8 through Figs. 11A, 11B, and 11C sets the power for each polarization component and the phase difference between the polarization components. Therefore, the command transmitted by the reader/writer 50 indicates an oval having an inclination. As compared with the reader/writer 50 shown from Fig. 3 to Fig. 7, a command corresponding to the arrangement of tags can be transmitted.

In the embodiments above, solely explained is the case in which the antenna of a tag is a linearly polarized antenna. However, the present invention is not limited to this application. As described in the embodiment above, when the antenna of a tag is a linearly polarized antenna, two systems exist, each transmitting the polarized waves of the vertical component and the horizontal component or the right-handed polarization component and the left-handed polarization component, and the carrier wave transmitted from the reader/writer 50 to analyze the polarization component depending on the distribution of tags is a circularly polarized wave. Additionally, for example, when a circularly polarized antenna constitutes the antenna of a tag, an antenna of a reader/writer can transmit the linearly polarized waves constituted by including equally the right-handed polarization component and the left-handed polarization component as carrier waves. Otherwise, when the two antennas transmit and receive the vertical component and the horizontal component, the carrier wave can be transmitted from one antenna. With the reader/writer having the above-mentioned configuration, depending on the distribution of the polarized waves of a plurality of tags having a circularly polarized antenna, the reflected wave can be received, thereby enabling the appropriate power setting for each polarization component of the command.

**Claims**

1. An RFID reader/writer (50), comprising:

   a generation unit (1) for generating a carrier wave of circular polarization;
   a first antenna (6A) for transmitting a first polarization component of the carrier wave of circular polarization, and receiving the first polarization component of a reflected carrier wave;
   a second antenna (6B) for transmitting a second polarization component orthogonal to the first polarization component of the carrier wave of circular polarization, and receiving the second polarization component of the reflected carrier wave;
   an analysis unit (9A, 9B) for analyzing the first and second polarization components contained in the reflected wave from a plurality of tags received by the first and second antennas (6A, 6B); and
   a setting unit for setting a ratio of transmission power to be transmitted from the first and second antennas (6A, 6B) to control the polarization of the carrier wave to be transmitted with a command to the plurality of tags based on a ratio of a strength of the first and second polarization components analysed by the analysis unit (9A, 9B).

2. The RFID reader/writer (50) according to claim 1, wherein
   the first and second polarization components are constituted by a vertical component and a horizontal component, and the carrier wave equally includes a vertical component and a horizontal component.

3. The RFID reader/writer (50) according to claim 1 or 2, further comprising
   a phase shifter (11) which is arranged between the first and second antenna (6A, 6B) and the generation device, and provides a phase shift of $\pi/2$ between a vertical component and a horizontal component contained in the carrier wave.

4. The RFID reader/writer according to claim 2, wherein
   the generation unit (1) for comprises a rotation device (12) providing the second antenna (6B) with a $\pi/2$ phase turned signal from a signal to be provided for the first antenna (6A) .

5. The RFID reader/writer (50) according to any preceding claim, wherein
   the first and second polarization components are respectively a right-handed polarization component and a left-handed polarization component, and
   a carrier wave having only the right-handed polarization component or the left-handed polarization component is transmitted through either the first or second antenna (6A, 6B).

6. The RFID reader/writer (50) according to any preceding claim, wherein
   the setting unit sets the transmission power from the first and second antennas (6A, 6B) using the amplitude of a signal of a polarization component in the first and second antennas (6A, 6B) obtained as a result of analysis by the analysis unit (9A, 9B).

7. The RFID reader/writer (50) according to any one of claims 1 to 5, wherein
   the setting unit sets the transmission power from the first and second antennas (6A, 6B) and a phase difference of an electric wave transmitted from each of the antennas (6A, 6B) using amplitude and a phase of a signal of a polarization component in the first and second antennas (6A, 6B) obtained as a result of analysis by the analysis unit (9A, 9B).

8. A method for transmitting a command to a plurality of tags from an RFID reader/writer (50), comprising the processes of:

   generating a carrier wave of circular polarization;
   analyzing a first polarization component and a second polarization component contained in reflected waves from a plurality of tags received by a first antenna (6A) transmitting the first polarization component of the carrier wave of circular polarization, and receiving the first polarization component of a reflected carrier wave, and a second antenna (68) transmitting the second polarization component orthogonal to the first polarization component of the carrier wave of circular polarization, and receiving the second polarization component of a reflected carrier wave; and
   setting a ratio of transmission power to be transmitted from the first and second antennas (6A, 6B) to control polarization of the carrier wave to be transmitted with a command to the plurality of tags based on a ratio of a strength of the first and second polarization components analysed by the analysis device.

**Patentansprüche**

1. RFID-Leser/Schreiber (50) mit:

   einer Erzeugungseinheit (1) zum Erzeugen einer Trägerwelle mit Zirkularpolarisation;
   einer ersten Antenne (6A) zum Senden einer ersten Polarisationskomponente der Trägerwelle mit Zirkularpolarisation und Empfangen der ersten Polarisationskomponente einer reflektierten Trägerwelle;
   einer zweiten Antenne (6B) zum Senden einer zweiten Polarisationskomponente, die zu der ersten Polarisationskomponente der Trägerwelle mit Zirkularpolarisation orthogonal ist, und Empfangen der zweiten Polarisationskomponente der reflektierten Trägerwelle;
   einer Analyseeinheit (9A, 9B) zum Analysieren der ersten und zweiten Polarisationskomponenten, die in der reflektierten Welle von einer Vielzahl von Etiketten enthalten sind und durch die ersten und zweiten Antennen (6A, 6B) empfangen wurden; und
   einer Einstelleinheit zum Einstellen eines Verhältnisses der Sendeleistung, mit der von den ersten und zweiten Antennen (6A, 6B) zu senden ist, um die Polarisation der Trägerwelle zu steuern, die mit einem Befehl an die Vielzahl von Etiketten zu senden ist, auf der Basis eines Verhältnisses einer Stärke der ersten und zweiten Polarisationskomponenten, die durch die Analyseeinheit (9A, 9B) analysiert wurden.

2. RFID-Leser/Schreiber (50) nach Anspruch 1, bei dem die ersten und zweiten Polarisationskomponenten aus einer vertikalen Komponente und einer horizontalen Komponente gebildet sind und die Trägerwelle gleichermaßen eine vertikale Komponente und eine horizontale Komponente enthält.

3. RFID-Leser/Schreiber (50) nach Anspruch 1 oder 2, ferner mit
   einem Phasenschieber (11), der zwischen den ersten und zweiten Antennen (6A, 6B) und der Erzeugungsvorrichtung angeordnet ist und eine Phasenverschiebung von $\pi/2$ zwischen einer vertikalen Komponente und einer horizontalen Komponente vorsieht, die in der Trägerwelle enthalten sind.

4. RFID-Leser/Schreiber (50) nach Anspruch 2, bei dem die Erzeugungseinheit (1) eine Rotationsvorrichtung (12) umfasst, die die zweite Antenne (6B) mit einem in der Phase um $\pi/2$ gedrehten Signal von einem Signal versieht, das für die erste Antenne (6A) vorzusehen ist.

5. RFID-Leser/Schreiber (50) nach einem vorhergehenden Anspruch, bei dem
   die ersten und zweiten Polarisationskomponenten eine rechtshändige Polarisationskomponente bzw. eine linkshändige Polarisationskomponente sind und
   eine frägerwelle, die nur die rechtshändige Polarisationskomponente oder die linkshändige Polarisationskomponente hat, entweder durch die erste oder die zweite Antenne (6A, 6B) gesendet wird.

6. RFID-Leser/Schreiber (50) nach einem vorhergehenden Anspruch, bei dem
   die Einstelleinheit die Sendeleistung von den ersten und zweiten Antennen (6A, 6B) unter Verwendung der Amplitude eines Signals einer Polarisationskomponente in den ersten und zweiten Antennen (6A, 6B) einstellt, die als Resultat der Analyse durch die Analyseeinheit (9A, 9B) erhalten wird.

7. RFID-Leser/Schreiber (50) nach einem der Ansprüche 1 bis 5, bei dem
   die Einstelleinheit die Sendeleistung von den ersten und zweiten Antennen (6A, 6B) und eine Phasendifferenz einer elektrischen Welle, die von jeder der Antennen (6A, 6B) gesendet wird, unter Verwendung der Amplitude und einer Phase eines Signals einer Polarisationskomponente in den ersten und zweiten Antennen (6A, 6B) einstellt, die als Resultat der Analyse durch die Analyseeinheit (9A, 9B) erhalten werden.

8. Verfahren zum Senden eines Befehls an eine Vielzahl von Etiketten von einem RFID-Leser/Schreiber (50), das die Prozesse umfasst:

   Erzeugen einer Trägerwelle mit Zirkularpolarisation;
   Analysieren einer ersten Polarisationskomponente und einer zweiten Polarisationskomponente, die in reflektierten Wellen von einer Vielzahl von Etiketten enthalten sind, die empfangen wurden durch eine erste Antenne (6A), die die erste Polarisationskomponente der Trägerwelle mit Zirkularpolarisation sendet und die erste Polarisationskomponente einer reflektierten Trägerwelle empfängt, und eine zweite Antenne (6B), die die zweite Polarisationskomponente, die zu der ersten Polarisationskomponente der Trägerwelle mit Zirkularpolarisation orthogonal ist, sendet und die zweite Polarisationskomponente einer reflektierten Trägerwelle empfängt; und Einstellen eines Verhältnisses der Sendeleistung, mit der von den ersten und zweiten Antennen (6A, 6B) zu senden ist, um die Polarisation der Trägerwelle zu steuern, die mit einem Befehl an dic Vielzahl von Etiketten zu senden ist, auf der Basis eines Verhältnisses einer Stärke der ersten und zweiten Polarisationskomponenten, die durch die Analysevorrichtung analysiert wurden.

**Revendications**

1. Lecteur/codeur (50) de radio-identification (RFID pour "Radio Frequency IDentification"), comprenant :

   une unité génératrice (1) destinée à engendrer une onde porteuse de polarisation circulaire ;
   une première antenne (6A) destinée à émettre une première composante de polarisation de l'onde porteuse de polarisation circulaire, et à recevoir la première composante de polarisation d'une onde porteuse réfléchie ;
   une seconde antenne (6B) destinée à émettre une seconde composante de polarisation orthogonale à la première composante de polarisation de l'onde porteuse de polarisation circulaire, et à recevoir la seconde composante de polarisation de l'onde porteuse réfléchie ;
   unité (9A, 9B) d'analyse destinée à analyser les première et seconde composantes de polarisation contenues dans l'onde réfléchie provenant d'une pluralité d'étiquettes reçues par les première et seconde antennes (6A, 6B) ; et
   unité de paramétrage destinée à paramétrer le rapport de puissance d'émission à émettre par les première et seconde antennes (6A, 6B) pour commander la polarisation de l'onde porteuse à émettre avec une instruction adressée à la pluralité d'étiquettes en se basant sur le rapport de l'intensité des première et seconde composantes de polarisation analysées par l'unité (9A, 9B) d'analyse.

2. Lecteur/codeur (50) de RFID selon la revendication 1, dans lequel les première et seconde composantes de polarisation sont constituées par une composante verticale et une composante horizontale, et dans lequel l'onde porteuse inclut également une composante verticale et une composante horizontale.

3. Lecteur/codeur (50) de RFID selon la revendication 1 ou 2, comprenant en outre un déphaseur (11) qui est disposé entre les première et seconde antennes (6A, 6B) et le dispositif générateur et qui procure un déphasage de $\pi/2$ entre une composante verticale et une composante horizontale contenues dans l'onde porteuse.

4. Lecteur/codeur (50) de RFID selon la revendication 2, dans lequel l'unité génératrice (1) comprend un dispositif (12) de rotation fournissant à la seconde antenne (6B) un signal déphasé de $\pi/2$ par rapport à un signal à fournir à la première antenne (6A).

5. Lecteur/codeur (50) de RFID selon l'une quelconque des revendications précédentes,
   dans lequel les première et seconde composantes de polarisation sont respectivement une composante de polarisation à droite et une composante de polarisation à gauche, et
   dans lequel une onde porteuse ayant seulement la composante de polarisation à droite ou la composante de polarisation à gauche est émise par l'une ou l'autre de la première ou de la seconde antenne (6A, 6B).

6. Lecteur/codeur (50) de RFID selon l'une quelconque des revendications précédentes, dans lequel l'unité de paramétrage paramètre la puissance d'émission des première et seconde antennes (6A, 6B) en utilisant l'amplitude d'un signal d'une composante de polarisation dans les première et seconde antennes (6A, 6B) obtenue comment résultat d'analyse par l'unité (9A, 9B) d'analyse.

7. Lecteur/codeur (50) de RFID selon l'une quelconque des revendications 1 à 5, dans lequel l'unité de paramétrage paramètre la puissance d'émission des première et seconde antennes (6A, 6B) et une différence de phase d'une onde électrique émise par chacune des antennes (6A, 6B) en utilisant l'amplitude et la phase d'un signal d'une composante de polarisation dans les première et seconde antennes (6A, 6B) obtenues comment résultat d'analyse par l'unité (9A, 9B) d'analyse.

8. Procédé d'émission, par un lecteur/codeur (50) de RFID, d'une instruction adressée à une pluralité d'étiquettes comprenant les opérations :

de génération d'une onde porteuse de polarisation circulaire ;

d'analyse d'une première composante de polarisation et d'une seconde composante de polarisation contenues dans des ondes réfléchies provenant d'une pluralité d'étiquettes reçues par une première antenne (6A) émettant la première composante de polarisation de l'onde porteuse de polarisation circulaire, et recevant la première composante de polarisation d'une onde porteuse réfléchie, et par une seconde antenne (6B) émettant la seconde composante de polarisation orthogonale à la première composante de polarisation de l'onde porteuse de polarisation circulaire, et recevant la seconde composante de polarisation d'une onde porteuse réfléchie ; et

de paramétrage du rapport de puissance d'émission à émettre par les première et seconde antennes (6A, 6B) pour commander la polarisation de l'onde porteuse à émettre avec une instruction adressée à la pluralité d'étiquettes en se basant sur le rapport de l'intensité des première et seconde composantes de polarisation analysées par le dispositif d'analyse.

F I G. 1

F I G. 2 A

F I G. 2 B

F I G. 2 C

F I G. 3

STRENGTH OF VERTICAL POLARIZATION COMPONENT =
STRENGTH OF HORIZONTAL POLARIZATION COMPONENT

F I G. 4 A

RECEPTION STRENGTH OF VERTICAL POLARIZATION COMPONENT = a
RECEPTION STRENGTH OF HORIZONTAL POLARIZATION COMPONENT = b

F I G. 4 B

TRANSMISSION STRENGTH OF VERTICAL POLARIZATION COMPONENT :
TRANSMISSION STRENGTH OF HORIZONTAL POLARIZATION COMPONENT = a : b

F I G. 4 C

F I G. 5

RIGHT-HANDED
POLARIZATION

6A

50

READER/WRITER

6B

LEFT-HANDED
POLARIZATION

F I G. 6 A

50

RIGHT-HANDED
POLARIZATION

6A

READER/WRITER          13A

RIGHT-HANDED
COMPONENT
STRENGTH MONITOR

VALUE a

LEFT-HANDED
COMPONENT
STRENGTH MONITOR

VALUE b

6B

13B

LEFT-HANDED
POLARIZATION

F I G. 6 B

50

RIGHT-HANDED
POLARIZATION

6A

READER/WRITER

RIGHT-HANDED
COMPONENT
STRENGTH SETTING
(Pa)

VALUE a

LEFT-HANDED
COMPONENT
STRENGTH SETTING
(Pb)

VALUE b

6B

LEFT-HANDED
POLARIZATION

F I G. 6 C

17

F I G. 7

F I G. 8

STRENGTH OF VERTICAL POLARIZATION COMPONENT =
STRENGTH OF HORIZONTAL POLARIZATION COMPONENT

F I G. 9 A

RECEPTION STRENGTH OF VERTICAL POLARIZATION COMPONENT = a (COMPLEX NUMBER)
RECEPTION STRENGTH OF HORIZONTAL POLARIZATION COMPONENT = b (COMPLEX NUMBER)

F I G. 9 B

TRANSMISSION STRENGTH OF VERTICAL POLARIZATION COMPONENT :
TRANSMISSION STRENGTH OF HORIZONTAL POLARIZATION COMPONENT = a : b

F I G. 9 C

F I G. 1 0

RIGHT-HANDED
POLARIZATION

6A

50

READER/WRITER

6B

LEFT-HANDED
POLARIZATION

FIG. 11A

50

RIGHT-HANDED
POLARIZATION

READER/WRITER

6A

RIGHT-HANDED
COMPONENT MONITOR
(ORTHOGONAL
DEMODULATION
CIRCUIT)

8A

9A

VALUE a

LEFT-HANDED
COMPONENT MONITOR
(ORTHOGONAL
DEMODULATOR)

VALUE b

6B

9B

LEFT-HANDED
POLARIZATION

8B

FIG. 11B

50

RIGHT-HANDED
POLARIZATION

READER/WRITER

6A

RIGHT-HANDED
COMPONENT
STRENGTH/PHASE
SETTINGS

VALUE a

LEFT-HANDED
COMPONENT
STRENGTH/PHASE
SETTINGS

VALUE b

6B

LEFT-HANDED
POLARIZATION

FIG. 11C

```
                    ┌─────────────┐
                    │    START    │
                    └─────────────┘
                           │
                           ▼
          ┌──────────────────────────────┐
          │   TRANSMITTING REFERENCE     │ ⌐ S11
          │   POLARIZATION (CIRCULAR     │
          │   POLARIZATION) SIGNAL BY CW │
          └──────────────────────────────┘
                           │
                           ▼
          ┌──────────────────────────────┐
          │ POLARIZATION ANALYZING PROCESS│ ⌐ S12
          └──────────────────────────────┘
                           │
                           ▼
          ┌──────────────────────────────┐
          │     WEIGHTING PROCESS        │ ⌐ S13
          │     (Pa, Pb, ∠a-∠b)          │
          └──────────────────────────────┘
                           │
                           ▼
                    ┌─────────────┐
                    │     END     │
                    └─────────────┘
```

F I G .  1 2

**EP 1 835 435 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10260251 A
- US 3852755 A
- US 5247305 A
- DE 4239065